# EUROPEAN PATENT SPECIFICATION

(11) **EP 0 501 544 B1**
(45) Date of publication and mention of the grant of the patent: **01.12.1993**
(21) Application number: 92200314.0
(22) Date of filing: 05.02.1992
(51) Int. Cl.: A23N 15/01

(54) **A device for removing crop from a stalk of a plant**
Gerät zum Ablösen von Gut vom Stengel einer Pflanze
Appareil pour détacher des récoltes attachées à la tige des végétaux

(30) Priority: 25.02.1991 NL 9100325
(43) Date of publication of application: 02.09.1992
(73) Proprietor: Janssen, Wilhelmus Henricus Johannes, NL-6049 AJ Herten (NL)
(72) Inventor: Janssen, Wilhelmus Henricus Johannes, NL-6049 AJ Herten (NL)
(74) Representative: Van kan, Johan Joseph Hubert, Ir.

(56) References cited:
- GB-A- 1 267 929
- NL-A- 8 105 684

## Description

The invention relates to a device in accordance with the preamble of claim 1 for removing crop from a stalk of a plant, said device being provided with two discs having a passage for a stalk along their coinciding central axes, a plurality of arms bounding said passage and carrying knives projecting into said passage, said arms being pivotally coupled to the one disc, whilst said arms are pivotally and slidably coupled to the other disc, said two discs are rotatable with respect to each other about said coinciding axes for moving the knives away from or towards each other, each of said discs is driven by its own motor driven by a pressurised fluid.

Such an device is known from Dutch patent application no. 8105684, which discloses an improvement of a device known from British patent no. 1,267,929.

Although the two latter publications in particular refer to the use of such a device for removing the sprouts from the stalk of a sprout plant and also the device according to the present invention is particularly suited for removing the sprouts from a sprout plant, it will be apparent that the device can e.g. also be used for processing other plants, such as maize plants, whereby the maize grains are removed from the stalk or cob, kail, whereby the leaves are cut from the stalk, etc.

The device according to Dutch patent application no. 8105684 is satisfactory per se, but it may be problematic in that the pressure with which the knives abut against the stalk can not be controlled sufficiently accurately in dependence of the nature of the products to be processed.

According to the invention as claimed in claim 1 the device is characterized in the two motors being connected in series, fluid pressure controlling means being provided for controlling the pressure between the two series-connected motors, and the construction being such that when a stalk is to be processed the two discs initially rotate at different speeds and the knives initially move towards each other until they touch the stalk, the pressure the knives exert on the stalk being controlled by said fluid pressure controlling means.

When using the construction according to the invention the knives will initially move towards each other, until they touch the stalk of the plant to be processed. The movement of the knives towards each other is then slowed down, as a result of which the pressure between the two series-connected hydromotors runs up. The pressure occurring between the two series-connected motors can be controlled very accurately by means of an excess pressure valve or pressure reducing valve and thus the pressure that-the knives exert on the stalk during operation can be controlled very accurately.

The invention will be further explained hereafter with reference to the accompanying Figures.

Figure 1 is an elevational view of the parts of the device according to the invention which are most essential to the invention.

Figure 2 is a sectional view of Figure 1, along the line II - II in Figure 1.

Figure 3 shows a diagrammatic embodiment of a circuit connecting the motors associated with the device.

Figure 4 shows a variant of the circuit shown in Figure 3.

Figure 5 shows a further variant of the circuit shown in Figure 3, whereby the pressure the knives exert on the stalk can likewise be controlled in dependence of the thickness of said stalk.

Figure 6 diagrammatically shows a mechanism for measuring the thickness of the stalk, which mechanism can be used in conjunction with the circuit shown in Figure 5.

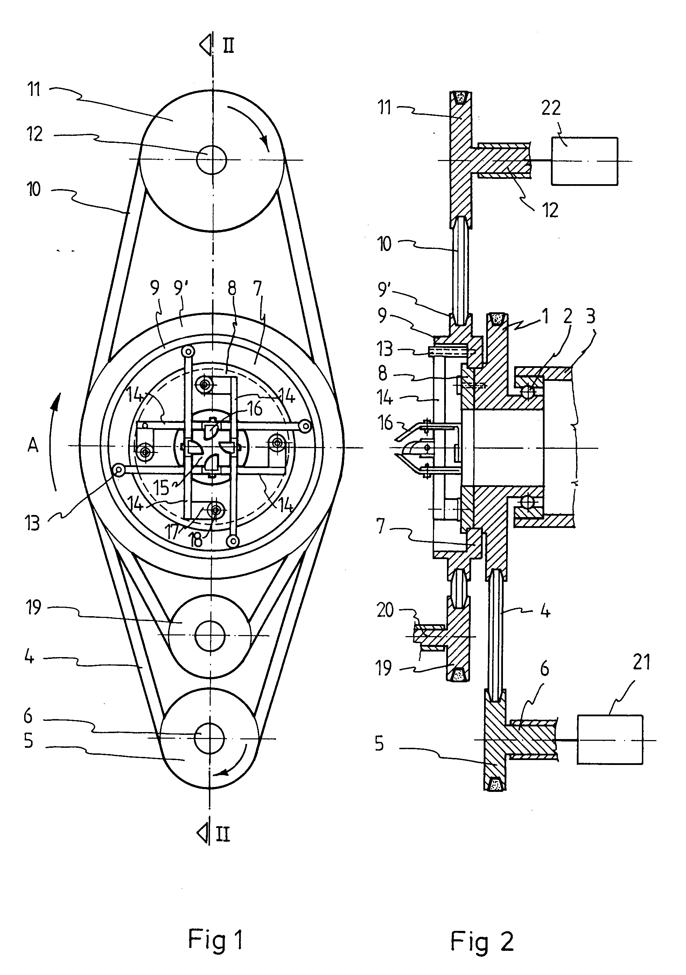

The device which is diagrammatically illustrated in Figures 1 and 2 comprises a first disc 1, which is supported in a bush 3 by means of a bearing 2, said bush being part of a frame (not shown) of the device according to the invention.

The outer circumference of the disc 1 is provided with a groove for receiving a V-belt 4 functioning to drive the disc, said V-belt also being passed over a disc 5, which is mounted on the end of a driving shaft 6 journalled in the frame.

The disc 1 functions to support a second disc 7, which is secured to the disc 1 by means of a retaining ring 8 fixed to the disc 1, in such a manner that the disc 7 is rotatable with respect to the disc 1, about its central axis coinciding with the central axis of the disc 1.

The disc 7 is provided with a rim 9, which is integral with a collar 9' provided around said rim, said collar being provided with a groove for receiving a V-belt 10. The V-belt 10 is also passed over a disc 11, which is mounted on the end of a driving shaft 12 supported by the frame and over a disc 19, which is mounted on a shaft 20 supported by the frame and being rotatably journalled in the frame. As will be apparent from Figures 1 and 2 the discs 11 and 19 are thereby arranged on either side of the disc 7, in such a manner that the central axes of the shafts 12 and 20 lie in one plane with the central axis of the disc 7. By providing the disc 19 it is prevented that a comparatively large transverse force is exerted on the disc 7, so that the disc 7 is arranged in a more or less "floating" manner with respect to the disc 1. This is important, since only little space is available for the journalling of the disc 7 on the disc 1 and thus the amount of wear occurring at the location of the support of the disc 7 on the disc 1 is strongly reduced as a result of the elimination of the transverse force on the disc 7 occuring with the construction that has been usual so far.

Near the inner circumference of the rim 9 four regularly spaced pins 13 are provided on the disc 7, the ends of arms 14 being freely rotatable about said pins. In the position of the various parts illustrated in Figure 1 the arms extend parallel to each other and perpendicularly to each other in pairs, in such a manner that the central parts of said arms 14 bound a passage 15. Knives 16 projecting into the passage are secured to the parts of the arms 14 bounding said passage.

The ends of the arms 14 remote from the pins 13 are provided with plates 17 extending transversely with respect to the arms, said plates being rotatably and slidably coupled, by coupling means 18, to the retaining ring 8 fixed to the disc 1.

A further description of said pivotal and slidable arrangement of the arms 14 carrying the knives 16 can be found in the aforesaid British patent No. 1.267.929.

The shaft 6 is coupled to a motor 21, only diagrammatically indicated in Figure 2, which can be driven by means of a pressurized fluid, such as pressurized air or oil. The shaft 12 is likewise coupled to such a motor 22 (only diagrammatically indicated in Figure 2).

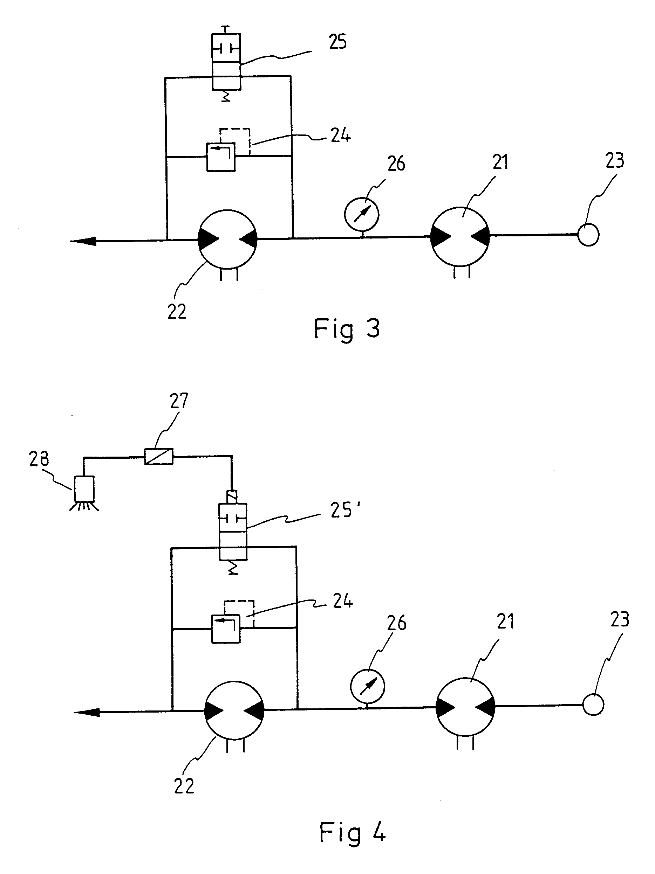

As is illustrated in more detail in Figure 3, the two motors 21 and 22 are connected in series, whereby pressurized air or oil can be supplied to said motors by means of a pump 23 (only diagrammatically indicated), whilst the fluid used for driving the motors 21 and 22, such as pressurized air or oil, can be discharged in the direction according to the arrow A to a tank (not shown), to which the suction pipe of the pump 23 is connected.

As will furthermore be seen from Figure 3, an adjustable excess pressure valve 24 is provided between the upstream end and the downstream side of the motor 22, as well as a foot-operated valve 25 connected in parallel therewith. The valve 25 can be adjusted against spring force, by means of a foot pedal or the like, from the position illustrated in Figure 3, in which the valve effects an open communication between the upstream side and the downstream side of the motor 22, into a position in which said connection between the upstream and dowstream sides of the motor 22 is broken.

A pressure gauge 26 may furthermore be provided between the motors 21 and 22, said pressure gauge measuring the pressure in the line which connects the downstream side of the motor 21 to the upstream side of the motor 22.

When during operation pressurized fluid is supplied, by means of the pump 23, to the two series-connected motors 21 and 22 and the valve 25 has been moved from the position illustrated in Figure 3 into a position in which the connection between the downstream and upstream sides of the pump 22 via the valve 25 is broken, the two motors 21 and 22 will be rotated. The construction is thereby such that if the knives 16 are not stopped the disc 9 driven by the motor 22 will rotate faster than the disc 1 driven by the motor 21. Consequently the discs 1 and 9 will rotate relative to each other, in such a manner that the knives 16 will move towards each other and thereby touch a stalk located between the knives, e.g. the stalk of a sprout plant.

When the movement towards each other of the knives is slowed down as a result of the presence of a stalk between the knives, and thus the rotation of the disc 9 relative to the disc 1 will also be slowed down, the pressure in the line part between the two series-connected motors 21 and 22 will run up. When a pre-determined pressure set by the valve 24 is exceeded oil will be able to flow, via the excess pressure valve 24, from the upstream side to the downstream side of the motor 22. By adjusting the pressure at which the valve 24 opens it will now be possible to control the pressure with which the knives will be pressed against the outer circumference of the stalk. By adjusting the valve 24 the operation of the device, in particular the force with which the knives are pressed against the stalk, can be controlled in a simple manner.

When the valve 25 is released it will return to the position illustrated in Figure 3, as a result of which an open communication is effected between the upstream side and the downstream side of the motor 22. Consequently the motor 22 is no longer driven by pressurized fluid, but by the motor 21, via the discs 1 and 9 being interconnected by means of the arms 14 carrying the knives 16. Consequently the discs 1 and 9 will be rotated with respect to each other in such a manner, that the knives 16 will move apart.

The diagram according to Figure 4 now substantially corresponds with the diagram according to Figure 3 and consequently like parts are numbered alike in the two Figures.

In this embodiment the foot-operated valve 25 is replaced by an electrically controlled valve 25', which operates in a corresponding manner, said valve via a time relay 27 being in communication with a sensor 28. The sensor 28 will detect the presence of a stalk introduced into the device and, upon a stalk being introduced, supply a signal to the electrically controlled valve, via the time relay 27, to break the connection between the upstream side and the downstream side of the pump 22. After the stalk has passed the electrically controlled valve will be reset into the position shown in Figure 4. It will be seen that the time relay 27 can influence a signal from the sensor 28 to the electrically controlled valve 25' to break the connection between the upstream side and the downstream side of the pump 12. It will be apparent that generally the time relay will be necessary, since the location where the sensor 28 detects the stalk does not exactly coincide with the location where the knives 16 act upon the stalk.

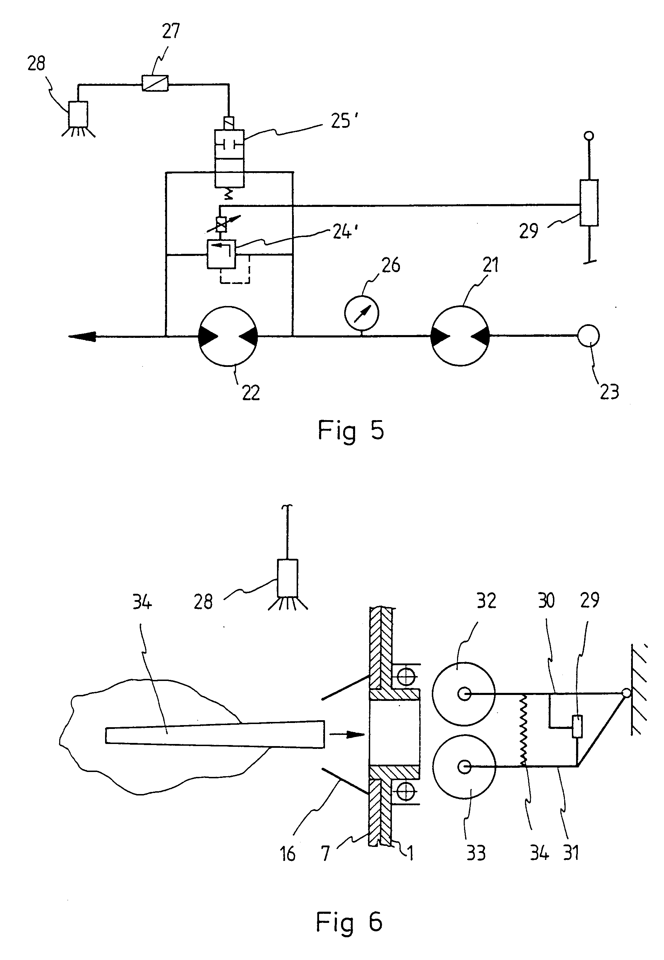

Figure 5 shows an arrangement corresponding with Figure 4, wherein an electrically operated excess pressure valve 24' is connected to a potentiometer 29.

As is shown in Figure 6, the potentiometer 29 is connected between two arms 30 and 31, which are pivotally coupled to the frame. Two opposed rollers 32 and 33 are coupled to the free ends of the arms 30 and 31. Furthermore a spring 34 is provided between the arms 30 and 31, which spring attempts to move the rollers 32 and 33 in a direction towards each other.

During operation a plant stalk 34 moved through the cutting head provided with knives 16, which is diagrammatically shown in Figure 4, will be gripped between the two rollers 32 and 33, which are thus moved apart by a distance which is dependent on the thickness of the stalk. Consequently also the potentiometer 29 will undergo an adjustment connected with the thickness of the stalk 34 to be processed. By means of the potentiometer 29 the adjustment of the electrically controlled excess pressure valve 24' will be controlled in such a manner, that the knife pressure will automatically be adjusted to the thickness of the stalk, so that a very accurate cutting of the crop will be possible at all times.

## Claims

1. A device for removing crop from a stalk of a plant, said device being provided with two discs (7,1) having a passage (15) for a stalk along their coinciding central axes, a plurality of arms (14) bounding said passage and carrying knives (16) projecting into said passage, said arms being pivotally coupled to the one disc (7), whilst said arms are pivotally and slidably coupled to the other disc (1), said two discs are rotatable with respect to each other about said coinciding axes for moving the knives away from or towards each other, each of said discs (7, 1) is driven by its own motor (22, 21) driven by a pressurised fluid, characterized in the two motors (22, 21) being connected in series, fluid pressure controlling means (24, 24') being provided for controlling the pressure between the two series-connected motors (22, 21), and the construction being such that when a stalk is to be processed the two discs (7, 1) initially rotate at different speeds and the knives (16) initially move towards each other until they touch the stalk, the pressure the knives (16) exert on the stalk being controlled by said fluid pressure controlling means.

2. A device according to claim 1, characterized in that said fluid pressure controlling means comprises an excess pressure valve (24, 24') provided between the upstream side and the downstream side of the downstream motor (22).

3. A device according to claim 2, characterized in that the excess pressure is adjustable.

4. A device according to claim 2 or 3, characterized in that the excess pressure valve (24, 24') is adjustable, dependent on the thickness of the stalk passed through the device.

5. A device according to claim 4, characterized in that an electrically controlled excess pressure valve (24') is provided, which is connected to a potentiometer (29), said potentiometer (29) being provided between a pair of arms (30, 31) that support rollers (32, 33) between which the stalk is passed.

6. A device according to any one of the preceding claims, characterized in that a control valve (25) is provided between the upstream and the downstream side of the downstream motor (22), said control valve (25) being adjustable between a position wherein an open communication between the upstream and the downstram side of the downstream motor (22), is effected and a position in which said communication is broken.

7. A device according to claim 6, characterized in that a foot-operated control valve (25) is provided.

8. A device according to claims 6, characterized in that an electrically controlled control valve (25') is provided, which is connected to a sensor (28), which detects the presence of a stalk in the device.

9. A device according to any one of the preceding claims, characterized in that the one disc (7) is rotatably supported by the other disc (1), whereby the one disc (7) is driven by a belt (10), which is passed over further discs (5, 11) arranged on either side of the one disc (7).

## Patentansprüche

1. Eine Vorrichtung zur Entfernung von Erntegut von einem Stengel einer Pflanze, wobei die Vorrichtung mit zwei Scheiben (7, 1) versehen ist, die einen Durchlap (15) für einen Stengel entlang ihrer koinzidierenden Mittelachsen aufweist, eine Mehrzahl von Armen (14) den Durchla begrenzt und in den Durchlap vorstehende Messer (16) trägt, die Arme schwenkbar an die eine Scheibe (7) angekoppelt sind, während die Arme schwenkbar und gleitbar mit der anderen Scheibe (1) gekoppelt sind, die beiden Scheiben mit Bezug aufeinander um die koinzidierenden Achsen drehbar sind, um die Messer weg- oder aufeinander zuzubewegen, und jede der Scheiben (7, 1) von ihrem eigenen Motor (22, 21) angetrieben ist, die ihrerseits von einem Druckmedium angetrieben sind, **dadurch gekennzeichnet,** **daß** die beiden Motoren (22, 21) hintereinander geschaltet sind, den Mediumdruck steuernde Mittel (24, 24') zur Steuerung des Druckes zwischen den beiden hintereinander geschalteten Motoren (22, 21) vorgesehen sind, und die Konstruktion derart ist, daß dann, wenn ein Stengel zu behandeln ist, die beiden Scheiben (7, 1) zunächst mit unterschiedlichen Geschwindigkeiten umlaufen und die Messer (16) sich zunächst aufeinander zubewegen bis sie den Stengel berühren, wobei der Druck, den die Messer (16) auf den Stengel ausüben, durch die den Mediumdruck steuernden Mittel gesteuert wird.

2. Eine Vorrichtung nach Anspruch 1, dadurch gekennzeichnet, daß die den Mediumdruck steuernden Mittel ein Überdruckventil (24, 24') umfassen, das zwischen der Eingangs- und Ausgangsseite des in Strömungsrichtung nachgeschalteten Motors (22) vorgesehen ist.

3. Eine Vorrichtung nach Anspruch 2, dadurch gekennzeichnet, daß der Überdruck einstellbar ist.

4. Eine Vorrichtung nach Anspruch 2 oder 3, dadurch gekennzeichnet, daß das Überdruckventil (24, 24') in Abhängigkeit von der Dicke des durch die Vorrichtung hindurchgeführten Stengels einstellbar ist.

5. Eine Vorrichtung nach Anspruch 4, dadurch gekennzeichnet, daß ein elektrisch gesteuertes Überdruckventil (24') vorgesehen ist, das mit einem Potentiometer (29) verbunden ist, wobei das Potentiometer (29) zwischen einem Paar von Armen (30, 31) vorgesehen ist, welche Rollen (32, 33) tragen, zwischen denen der Stengel hindurchgeführt wird.

6. Eine Vorrichtung nach einem der voranstehenden Ansprüche, dadurch gekennzeichnet, daß ein Steuerventil (25) zwischen der Eingangs- und Ausgangsseite des in Strömungsrichtung nachgeschalteten Motors (22) vorgesehen ist, wobei das Steuerventil (25) zwischen einer Position, in welcher eine offene Verbindung zwischen der Eingangs- und Ausgangsseite des in Strömungsrichtung nachgeschalteten Motors (22) bewirkt wird, und einer Position, in welcher diese Verbindung unterbrochen ist, einstellbar ist.

7. Eine Vorrichtung nach Anspruch 6, dadurch gekennzeichnet, daß ein fußbetätigtes Steuerventil (25) vorgesehen ist.

8. Eine Vorrichtung nach Anspruch 6, dadurch gekennzeichnet, daß ein elektrisch gesteuertes Steuerventil (25') vorgesehen ist, welches mit einem Sensor (28) verbunden ist, der die Anwesenheit eines Stengels in der Vorrichtung feststellt.

9. Eine Vorrichtung nach einem der voranstehenden Ansprüche, dadurch gekennzeichnet, daß die eine Scheibe (7) drehbar von der anderen Scheibe (1) abgestützt ist, so daß die eine Scheibe (7) von einem Riemen (10) angetrieben wird, der über weitere Scheiben (5, 11) verläuft, die zu beiden Seiten der einen Scheibe (7) angeordnet sind.

## Revendications

1. Dispositif pour enlever la récolte de la tige d'une plante, ledit dispositif étant constitué par deux disques (7,1) ayant un passage (15) pour une tige le long de leurs axes centraux coïncidants, une pluralité de bras (14) délimitant ledit passage et portant des lames (16) dépassant dans ledit passage, lesdits bras étant reliés de manière à pivoter sur l'un des disques (7), tandis que lesdits bras sont reliés de manière à pivoter et à coulisser sur l'autre disque (1), lesdits deux disques pivotent l'un par rapport à l'autre autour desdits axes coïncidants, pour éloigner ou rapprocher les lames l'une par rapport à l'autre, chacun desdits disques (7,1) est entraîné par son propre moteur (22,21), entraîné par un fluide sous pression, caractérisé par le fait que les deux moteurs (22,21) sont reliés en série, un moyen de régulation de la pression du fluide (24,24') étant prévu pour régler la pression entre les deux moteurs reliés en série (22,21), et la construction étant telle que lorsqu'une tige doit être traitée, les deux disques (7,1) tournent initialement à des vitesses différentes et les lames (16) se déplacent initialement l'une vers l'autre jusqu'à ce qu'elles touchent la tige, la pression exercée par les lames (16) étant déterminée par ledit moyen de régulation de pression du fluide.

2. Dispositif selon revendication 1, caractérisé par le fait que ledit moyen de régulation de pression comprend un clapet de surpression (24, 24') prévu entre le côté amont et le côté aval du moteur aval (22).

3. Dispositif selon revendication 2 caractérisé par le fait que la surpression est réglable.

4. Dispositif selon revendication 2 ou 3 caractérisé par le fait que le clapet de surpression (24, 24') est réglable, en fonction de l'épaisseur de la tige passant par le dispositif.

5. Dispositif selon revendication 4 caractérisé par le fait qu'un clapet de surpression commandé électriquement (24') est prévu et relié à un potentiomètre (29), ledit potentiomètre (29) étant prévu entre une paire de bras (30,31) qui supportent des galets (32,33) entre lesquels passe la tige.

6. Dispositif selon l'une quelconque des revendications précédentes, caractérisé par le fait qu'une soupape de régulation (25) est prévue entre les côtés amont et aval du moteur aval (22), ladite soupape de régulation (25) étant réglable entre une position dans laquelle une communication ouverte entre les côtés amont et aval du moteur aval (22) est établie et une position dans laquelle ladite communication est coupée.

7. Dispositif selon revendication 6, caractérisé par le fait qu'un distributeur de commande actionné au pied (25) est prévu.

8. Dispositif selon revendication 6, caractérisé par le fait qu'un distributeur de commande fonctionnant électriquement (25') est prévu, et relié à un capteur (28) qui détecte la présence d'une tige dans le dispositif.

9. Dispositif selon l'une quelconque des revendications précédentes, caractérisé par le fait que l'un des disques (7) est supporté par l'autre disque (1) de manière à pivoter par rapport à lui, où le premier disque (7) est entraîné par une courroie (10) qui passe par-dessus d'autres disques (5,11) disposés de part et d'autre du premier disque (7).
